(19) **Europäisches Patentamt European Patent Office Office européen des brevets**

(11) **EP 1 711 844 B1**

(12) **EUROPEAN PATENT SPECIFICATION**

(45) Date of publication and mention
of the grant of the patent:
**14.10.2009 Bulletin 2009/42**

(51) Int Cl.:
*G01S 13/32* (2006.01)  *G01S 13/38* (2006.01)
*G01S 13/58* (2006.01)

(21) Application number: **04821774.9**

(22) Date of filing: **02.11.2004**

(86) International application number:
**PCT/US2004/036446**

(87) International publication number:
**WO 2005/104417 (03.11.2005 Gazette 2005/44)**

(54) **MULTIPLE FREQUENCY THROUGH-THE-WALL MOTION DETECTION AND RANGING USING DIFFERENCE-BASED ESTIMATION TECHNIQUE**

MEHRFREQUENZ-DURCH-DIE-WAND-BEWEGUNGSDETEKTION UND ENTFERNUNGSMESSUNG MIT EINER AUF DIFFERENZEN BASIERENDEN SCHÄTZTECHNIK

DETECTION DE MOUVEMENT ET DETERMINATION DE DISTANCE MULTIFREQUENCE A TRAVERS DES PAROIS A L'AIDE D'UNE TECHNIQUE D'ESTIMATION BASEE SUR LA DIFFERENCE

(84) Designated Contracting States:
**AT BE BG CH CY CZ DE DK EE ES FI FR GB GR HU IE IS IT LI LU MC NL PL PT RO SE SI SK TR**

(30) Priority: **20.01.2004 US 537868 P**
**14.09.2004 PCT/US2004/030116**

(43) Date of publication of application:
**18.10.2006 Bulletin 2006/42**

(73) Proprietor: **BAE SYSTEMS Information and Electronic Systems Integration Inc.**
**Nashua, NH 03060 (US)**

(72) Inventors:
• **ZEMANY, Paul, D.**
**Amherst, NH 03031-1510 (US)**
• **SUTPHIN, Eldon, M.**
**Merrimack, NH 03054 (US)**

(74) Representative: **BAE SYSTEMS plc**
**Group IP Department**
**Lancaster House**
**P.O. Box 87**
**Farnborough Aerospace Centre**
**Farnborough,**
**Hampshire GU14 6YU (GB)**

(56) References cited:
**EP-A- 1 253 441**        **EP-A1- 0 849 607**
**US-A- 4 024 540**        **US-A- 5 963 163**
**US-A1- 2003 112 142**    **US-A1- 2003 112 142**
**US-B1- 6 380 882**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

RELATED APPLICATIONS

This Application claims rights under 35 USC § 119(e) from U.S. Provisional Application Serial No. 60/537,868 filed January 20, 2004.

FIELD OF THE INVENTION

This invention relates to through-the-wall sensors and more particularly to the use of a two-tone CW radar to detect both motion and range of objects behind a wall.

BACKGROUND OF THE INVENTION

As described in PCT Patent Application PCT/US04/30116 filed September 14, 2004 by Paul Zemany and Eldon Sutphin, a system is described for projecting continuous wave radar energy through a wall to be able to detect motion of persons behind the wall. In the invention described above, motion is detected by a change in the phase difference between the transmitted wave and the received wave, which is indeed sensitive in detecting motion.

However, the use of a single frequency radar does not permit the detection of range to the moving individual and may provide less-than-adequate information to individuals, for instance when trying to detect the whereabouts of a moving individual behind a wall.

As described in the afore-mentioned Patent Application by Zemany and Sutphin, detecting motion behind a wall is extremely useful in both civilian and military applications. For instance, locating the whereabouts of a down firefighter in a burning building is of consequence for firefighters, whereas detecting the position of an individual behind a wall may be of significant interest to military forces seeking to capture or remove the individual from being a threat.

Moreover, knowing not only that the motion has occurred but also range, one can estimate what it will take to provide personnel to rescue, for instance, an individual within a burning building. Range also is important to be able to ascertain where a wanted individual is so that the individual can be captured. By using two units capable of providing range, it is then possible to provide the location of the individual.

It will be appreciated that in the past, ultra wideband devices have been used as ground-penetrating and through-the-wall radars. The difficulty with ultra wideband approaches is that one has to generate short pulses, which requires fairly expensive hardware. A particular difficulty with ultra wideband is that walls have frequency-dependent attenuation. This results in a distortion of the return pulses that pass through the wall. This distortion blurs the pulse, making it hard to correlate. Moreover, in ultra wideband applications, one must integrate over multiple pulses in order to obtain enough processing gain to detect objects inside a building. In this regard, in ultra wideband systems, one has to generate a stream of pulses. The problem with generating streams of pulses is the existence of clutter and with an ultra wideband pulsed radar, one detects everything within a room. One therefore has to have a means for discriminating clutter from background, which ultra wideband systems do not do.

US 6,380,882 discloses a motion detector based on the Doppler principle that contains a microwave module for emitting a microwave signal containing at least two frequencies into a room under surveillance and for receiving the radiation reflected from the latter. An evaluation stage is connected to the microwave module and generates first and second Doppler signals from the received radiation. The first and second Doppler signals have a phase difference which is proportional to the distance of an object reflecting the microwave signal. The phase difference is determined by an integral transformation. In addition, the relative size of an object and the direction of travel of an object reflecting the microwave signal can be determined by the evaluation stage.

What is therefore required is an easily portable, low cost, low power drain, compact unit that can be positioned outside a building and that can detect motion of individuals within the building, discriminate against inanimate objects and at the same time provide range to the detected moving object.

SUMMARY OF INVENTION

In order to detect range as well as the existence of motion, in the subject invention a multi-tone CW radar is used in which the frequency difference between the tones in one embodiment is on the order of one MHz. Thus the tones are one MHz apart. In accordance with a first aspect of the invention, there is provided a method for the estimation of the range of a moving object to a measurement apparatus in accordance with the steps of Claim 1. An apparatus is provided in accordance with a further aspect of the invention, in accordance with the features of Claim 3.

It is a finding of the subject invention that, for an object exhibiting constant motion or velocity, the phase shift between the two waveforms representing the phase difference between transmitted and returned waves for the two tones or frequencies is directly related to range. This is because comparing waveforms corresponding to the phase difference between the outgoing and incoming waves at the two frequencies results in a relationship between the phase shift between the two waveforms and range. For instance, at zero range there is no difference in phase between the two waveforms. At a range equal to $\lambda/4$ one has a 180° phase shift between the two waveforms. In between, for constant motion objects there is a linear relationship between phase shift and range such that by measuring phase shift between the two waveforms one can deduce range. Here $\lambda$ is the wavelength associated with the difference in $f_1$ and $f_2$, or in this case one megahertz.

However, in reality individuals rarely maintain a constant velocity and it can be shown that the subject system can measure range to objects having a pseudo-random motion.

In order to determine range for random motion, the two-tone CW radar used for constant motion is used to drive a single antenna. Here continuous waves at the two frequencies $f_1$ and $f_2$ are simultaneously applied to the antenna. The system measures the phase difference between the returned versus transmitted energy for the first tone, $f_1$ and the second tone, $f_2$. This results in two waveforms each specifying the temporal phase difference for the two respective tones. In the constant motion case, the phase shift between these two waveforms indicates the range from the antenna to the moving object.

In order to accommodate the usual situation in which the object's motion varies over time, a model-based signal processing algorithm extracts range by comparing the waveform corresponding to the time sequence of phase differences for the detected returns at one of the frequencies with the predicted waveforms corresponding to the predicted phase differences for the other frequency at a number of ranges, with the waveform closest to that which is detected being declared as the range to the moving object.

Due to the use of a model-based system, movement is not limited to constant velocity or to large movements compared to the carrier wavelength, meaning that even slight hand movement can be sensed.

The model is populated by selecting the first and second tones and setting their frequencies apart by for instance one MHz. For one frequency, $f_1$, one samples the mixer output used to provide a signal corresponding to the phase difference between outgoing and incoming energy. The output of the mixer thus produces a time sequence waveform corresponding to the phase difference between outgoing and incoming waves at $f_1$. This $\emptyset_{diff}$ $f_1$ waveform is used by a predictor involving a mathematical model that predicts the time sequence waveform for $f_2$ based on information from $f_1$ for an a specific range value. The other input to the predictor is range. The model is built up in terms of generating stored waveform templates by sequencing through a number of ranges to produce a set of range-dependant templates, each keyed to a given range. The time sequence waveform for $f_2$ corresponding to the phase difference between outgoing and incoming waves from real-time data is then compared to the predicted time sequence waveform for $f_2$ to ascertain which template and thus which range offers the best fit. Optimal search methods can be employed to obtain the range value (R) that gives the best fit.

Thus, it is possible to determine range to the motion even if the motion is not constant or the target moves only a fraction of the carrier wavelength

For random motion, the system provides not only an indication of the existence of an individual but also determines the range to the individual by first developing range templates or using an iterative search to find the best range value, and by comparing the data associated with real-time returns to the templates, with a matching algorithm determining range.

The range templates in one embodiment are generated by a predictor that predicts from one waveform corresponding to the phase differences for the first tone, namely $f_1$, the predicted phase differences for the second tone.

The predictor algorithm is based on using the time domain signal or temporal waveform corresponding to the temporal phase difference between outgoing and reflected energy at $f_1$ available from a mixer for $f_1$ to predict the temporal phase difference waveform between outgoing and reflected energy at $f_2$ available as a signal produced by a mixer for $f_2$. To describe this the following are defined:

$$k_1 = 2\pi/\lambda_1 \qquad\qquad \text{Equation 1}$$

$$k_2 = 2\pi/\lambda_2 = k_1 + \Delta k \qquad\qquad \text{Equation 2}$$

The output of the mixer caused by the energy reflected from the moving target is:

$$Y_1(t) = A_1 e^{-ik_1 r(t)/2} \qquad \text{for mixer 1} \qquad \text{Equation 3}$$

$$Y_2(t) = A_2 e^{-ik_2 r(t)/2} \qquad \text{for mixer 2} \qquad \text{Equation 4}$$

$$Y_2(t) = Y_1(t) e^{-i\Delta k r(t)/2} \quad \text{obtained by substitution} \qquad \text{Equation 5}$$

The above equation predicts waveform $Y_2(t)$ using the difference between $k_1$ and $k_2$ and the range $r(t)$.

Here it can be seen that one can predict the expected temporal phase difference waveform for $f_2$ from the measured phase difference waveform for $f_1$.

By having a predicted waveform for the temporal phase differences of $f_2$, one can compare this waveform with a waveform generated from the measured actual phase differences at $f_2$,

Since the predictor generates predicted waveforms at various ranges, when the waveform generated from measured data is compared with one of the predicted waveforms, a match indicates the range to the moving object.

If the comparison results in a significant disparity between the two waveforms, one can adjust the range input to the predictor to generate another predicted waveform for $f_2$. When this newly generated waveform is compared to the waveform associated with measured data, assuming a closer match, the range associated with the newly generated predicted waveform is determined to be the actual range of the moving object.

It will be appreciated that the phase shift between the waveforms replicates at intervals of $\lambda/4$ where in this case $\lambda$ is the wavelength of the difference frequency. In general, a difference between $f_1$ and $f_2$ of one MHz corresponds to a $\lambda$ of about 300 meters. $\lambda/4$ thus corresponds to 75 meters and is termed a "range cell." Returns from moving objects outside of the range cell that would duplicate those inside the range cell can be distinguished in terms of the amplitude of the signals returned from the moving object. Thus a much-decreased amplitude return indicates a moving object in a second or third range cell.

The size of the range cell and thus the resolution of the system is determined by the separation in the two tones. One would normally want to start with a large range cell, in the above example 75 meters, and set the initial range cell by separating the two tones by one MHz.

If movement is ascertained within this relatively large range cell, one may subsequently decide to reduce the size of the range cell to increase resolution. If one sees activity in the larger range cell one can, for instance, increase the separation in the two tones to 3 MHz, which makes the range cells one-third the original size.

Having ascertained the range cell that all activity is in, one can increase the resolution of the subject system by increasing the separation between the two tones to decrease the range cell size and thus increase the resolution.

More particularly, this system detects not only motion in a room but also the range of the moving object. One wants to know and locate where in the building the moving object is. If one is able to measure range, this aids in that process of locating individuals in a room or behind a wall.

In order to provide range, the subject system uses two frequencies that are fairly close together, for instance one megahertz apart. One chooses two close frequencies and then looks at the output of each mixer for both frequency 1 and frequency 2. By using a model that describes the differences in the frequency 1 and frequency 2 outputs, one adjusts the range parameter for the model so that when the difference between the model predictions are minimized based on observed data collected, the range that gives the best or closest agreement corresponds to the range of the moving object.

Thus, at a given distance there is a two-way trip that the signal has to travel, with a phase shift between the transmitted and received signals corresponding to that distance. If the distance changes, the phase shift will change. Since each frequency is slightly different, that phase shift will change a little bit differently for the two frequencies. What the system does is to model the two-way trip for each frequency. One frequency shows how the individual is moving in a non-uniform way and one makes a comparison with the motion of the same individual as detected by the second frequency, assuming that both frequencies monitor the same motion. The only parameter left is the range, and by adjusting range, when the range parameters come to the right value, the models for $f_1$ and $f_2$ will match and that range is a good prediction of the range of the moving object.

In summary, a multi-frequency or multi-tone CW radar is used to project radar signals from the same antenna and to receive returns from the same antenna. The phase difference between the outgoing wave and the returns of the two-tone pulses is analyzed to determine both the existence of motion and the range to the moving object from the antenna. In a preferred embodiment a model is made which has range as its major parameter. The waveform associated with the phase difference between outgoing and returns for one of the tones is then compared against the templates produced by the model to determine which model has a range that most closely matches. Using this technique and varying the range parameters, when one detects a match between the two waveforms one can obtain range to a moving object even if its motion is pseudo-random. If range is measured from multiple locations using two or more units, it is possible to measure the location of a moving object. In one embodiment, this is done by assuming a grid within a building. One then algorithmically combines the ranges from various locations. This is done by using the grid and a back-projection algorithm to provide the location of the moving object.

BRIEF DESCRIPTION OF THE DRAWINGS

These and other features of the subject invention will be better understood in connection with a Detailed Description, in conjunction with the Drawings, of which:

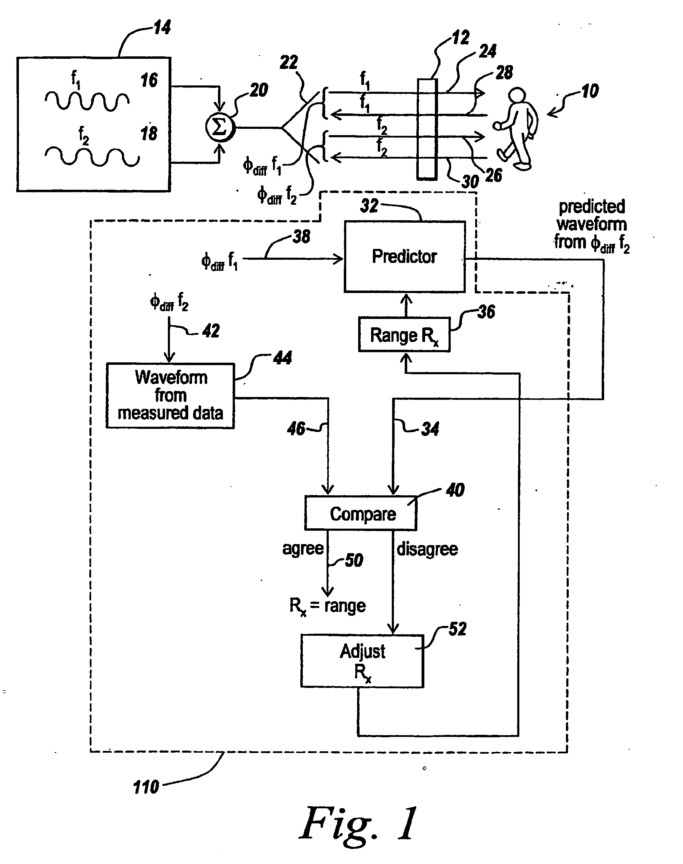

Figure 1 is a diagrammatic illustration of the subject range detection system in which the range to a moving object behind a wall is detected by projecting two-toned continuous waves through the wall and detecting the phase difference between outgoing and incoming waves for each of the two tones, with the phase difference signal for one frequency being applied to a predictor to generate a predicted waveform for the phase difference of the second of the two tones, with the predicted waveform being compared with a waveform derived from measured data such that when the two waveforms compare favorably, the range associated with the matched waveform is the declared range;

Figure 2 is a waveform diagram for a pseudo-random moving object behind a wall, showing the phase difference waveforms for the two tones, namely $f_1$ and $f_2$, at a location that is adjacent the antenna of Figure 1, showing the relative identity of the two waveforms;

Figure 3 is a waveform diagram for a pseudo-random moving object behind a wall, showing the phase difference waveforms for the two tones, namely $f_1$ and $f_2$, at a location at a distance from the antenna at which the waveforms are 180° out of phase;

Figure 4 is a waveform diagram for a pseudo-random moving object behind a wall, showing the waveforms for the two tones, namely $f_1$ and $f_2$, at a location intermediate the zero object position of Figure 2 and the phase reversal object position of Figure 3, indicating an offset between the two waveforms associated with a location between phase reversal location and the zero position of the pseudo-random moving object;

Figure 5 is a block diagram of a two-tone CW radar for use in the subject invention in which phase difference of the outgoing and incoming signals for each of the two frequencies is detected as the output of respective mixers, with the outputs of the respective mixers being applied to a microprocessor for determining not only the presence of motion but also range to the moving object;

Figure 6 is a waveform diagram of measured temporal phase differences for the two tones, $f_1$ and $f_2$, showing a difference in the two waveforms; and,

Figure 7 is a series of projected waveforms for the second of the two frequencies at eight different ranges, with the fifth of the predicted waveforms being the closest match to the measured $f_2$ waveform corresponding to a range of approximately 50 meters.

DETAILED DESCRIPTION

Referring now to Figure 1, in order to detect the presence of an individual 10 constituting a moving object behind a wall 12, a radar 14 is provided, which transmits continuous waves 16 and 18 through a summation device 20 to an antenna 22. Antenna 22 simultaneously projects the two waveforms at $f_1$ and $f_2$ as illustrated at 24 and 26 through wall 12, where they meet object 10 and are reflected backwardly as illustrated at 28 and 30. The phase difference between outgoing and incoming waveforms for each of the frequencies is detected as will be discussed, and in one embodiment the waveform corresponding to the temporal phase difference for tone $f_1$ is coupled to a predictor 32. It is the purpose of predictor 32 to predict the temporal waveform that would be expected to exist for the temporal phase difference waveform at frequency $f_2$ for an object at a known distance or range, with the output of the predictor being a waveform on line 34. In order for predictor 32 to operate, the predictor predicts the $f_2$ waveform for a predetermined range $R_x$ as illustrated at 36, such that for a given input waveform at one frequency, a set of templates at the other frequencies corresponding to predicted waveforms at different ranges constitutes the output of predictor 32.

Predictor 32, upon receiving a waveform input on input line 38, for an initial range generates a predicted waveform for the temporal phase difference for the second tone and applies this waveform to a comparator 40.

As illustrated by arrow 42, measured data in terms of the temporal phase difference waveform for tone $f_2$ is applied to a waveform generator 44. This provides a temporal rendition of the phase difference of the outgoing and incoming waves at frequency $f_2$ from measured data. This waveform is applied on line 46 to comparator 40.

If the waveform on line 34 and the waveform on line 46 are sufficiently similar or agree, then one declares that the range to object 10 is the range that has been loaded into predictor 32 to generate the predicted waveform. This range is outputted at 50 as illustrated.

On the other hand, if there is no significant agreement between the waveforms on lines 34 and 46, then as illustrated at unit 52, the range associated with the predictor 32 is changed and the process is iteratively carried out until there is a sufficient match between the waveforms on lines 34 and 46. When there is such a match, the range that was used in the predictor 32 is the declared range to the moving target.

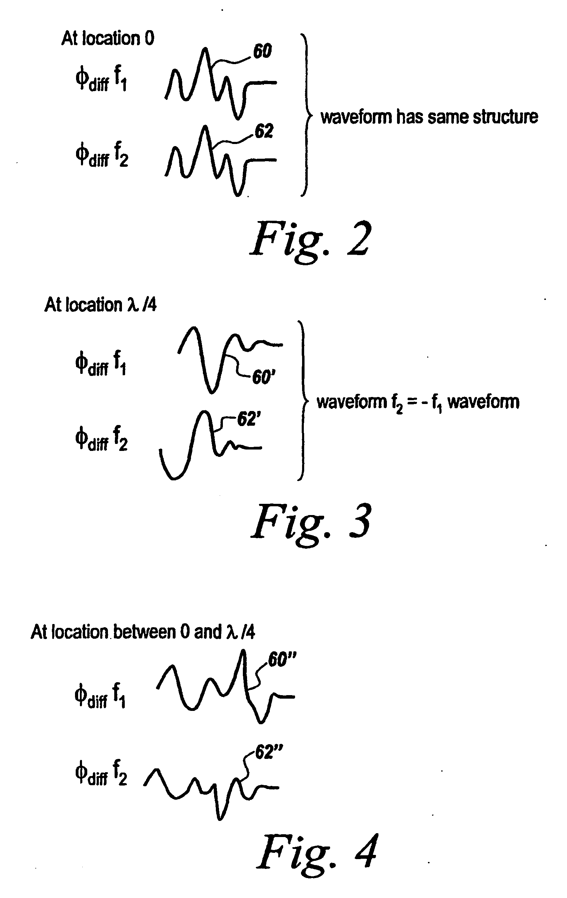

Referring to Figure 2, assuming that one has phase difference waveforms 60 and 62 that are the result of the radiation from antenna 22 impinging up a randomly moving object behind wall 12, then as can be seen, for a location that is adjacent antenna 22, namely at zero distance, the waveforms themselves are very nearly the same.

Referring to Figure 3, if the moving object creating the phase difference in the returns to antenna 22 is at a location that is $\lambda/4$, with $\lambda$ being the wavelength of the tone separation, in one embodiment one MHz, then waveforms 60 and 62 are those as shown as waveforms 60' and 62', which are 180° phase shifted. This means that even for pseudo-random motion that results in non-sinusoidal waveforms 60 and 62, one can nonetheless establish that the distance of the object that is moving in a pseudo-random fashion is at $\lambda/4$ away from antenna 22.

Referring to Figure 4, for waveforms 60" and 62", these waveforms are those that result from a pseudo-random moving object at a range between zero and $\lambda/4$. If it were possible to measure the phase difference between these two non-sinusoidal waveforms, one could ascertain the distance from the antenna and therefore the range.

However, and referring back to Figure 1, since it is not possible to accurately measure the phase shift of phase difference between waveforms 60" and 62", at least from inspection, one generates a series of waveform templates relating to one of the tones or frequencies that would be expected at one of a plurality of ranges. This waveform is predicted from the measured waveform of the other of the frequencies or tones, with the prediction algorithm being described above.

In this manner, one generates a series of waveform templates at one particular frequency or tone, which is what would be expected at various ranges. This is done by using the waveform associated with the other tone.

Having generated a series of such range-dependent templates, one then seeks to compare a waveform from measured data with the predicted waveform, which his range dependent. One can use any one of a number of curve-matching or best-fit techniques to ascertain to which of the waveform templates the measured data corresponds. When there is a sufficient match, one then declares the range to the moving object to be the range associated with the particular template to which the measured waveform was attached.

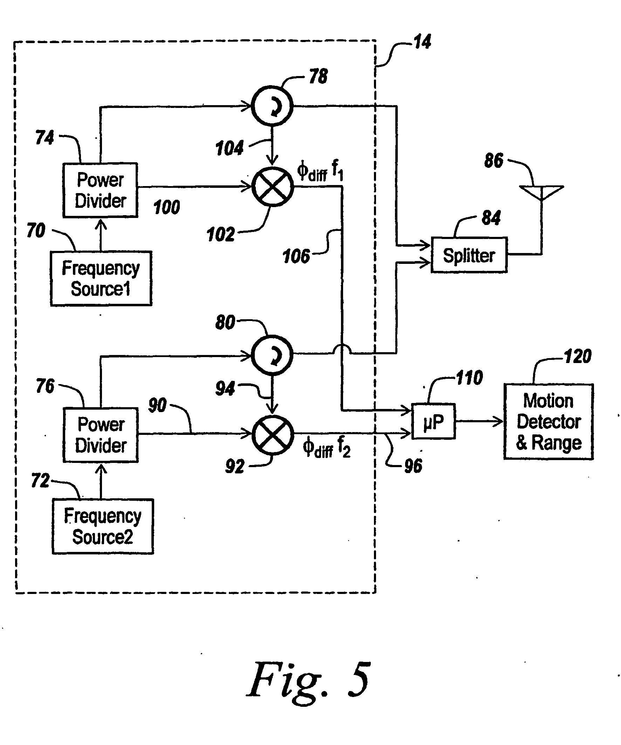

Referring to Figure 5, apparatus for deriving the temporal phase difference waveforms is shown in terms of a dual frequency radar, although some advantage may be obtained by using more than two different frequencies. However, for the present purposes, radar 14 can be characterized as including a pair of frequency sources 70 and 72 respectively at $f_1$ and $f_2$, each of which driving a power divider respectively 74 and 76, the outputs of which are respectively coupled to circulators 78 and 80, the outputs of which are in turn coupled to a summing or mixing device such as a splitter 84 and thence to an antenna 86.

Power divider 76 provides an output along line 90 to a mixer 92, which mixes it with an output corresponding to the returned signal from a moving object that comes out on line 94. The output of mixer 92 along line 96 is therefore the phase difference between the outgoing and incoming signals at frequency $f_2$.

Likewise, for power divider 74, one output is applied over line 100 to a mixer 102, which has as its other input a signal on line 104 such that the output along line 106 from mixer 102 is a phase difference waveform associated with the phase difference between outgoing and incoming signals associated with $f_1$.

Microprocessor 110 performs the functions of detecting not only motion but the range to the object in motion as described above, with a motion detector and range-determining unit 120 outputting the range to the moving target, be it in continuous motion or pseudo-random motion.

It will be appreciated that microprocessor 110 contains the predictor, comparator and range adjustment functions that are described in connection with Figure 1.

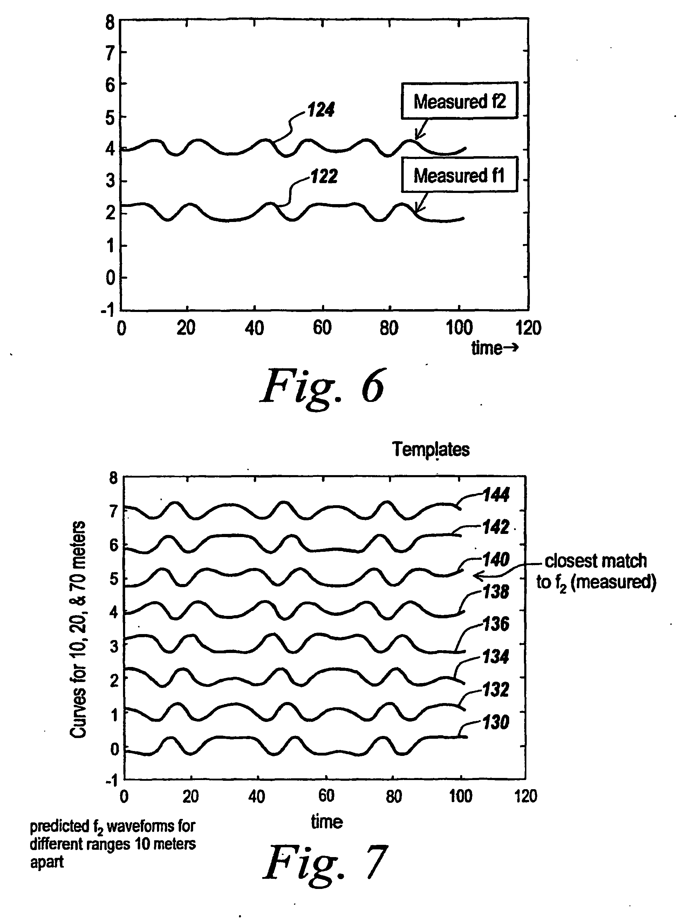

As illustrated in Figure 6, the measured phase difference waveforms applied to unit 110 are illustrated at 122 for the first tone or $f_1$ and 124 for the second tone or $f_2$. Here it will be appreciated that for these signals, an object behind wall 12 has reflected the signals such that the phase difference waveforms can be generated. The range at which the object reflects the radar energy is not known and, as can be seen, the phase difference waveforms are slightly different one tone to the other.

Referring to Figure 7, a number of waveforms 130, 132, 134, 136, 138, 140, 142 and 144 constitute a number of templates, with these waveforms being the predicted $f_2$ waveforms for different ranges. In this case the ranges are separated by 10 meters.

If, as is done by unit 110, one compares the measured waveform at $f_2$, namely waveform 122, with each of these templates, one ascertains that the closest match to the measured $f_2$ waveform is waveform 140. This leads to the declaration that the range to the object is 50 meters.

What will be seen, even though the object in question may be exhibiting a pseudo-random motion, and even though this pseudo-random motion produces phase difference waveforms that are non-sinusoidal, one can nevertheless, with waveform matching techniques, determine which of the templates is closest to the measured waveform, whereby range to the object producing this waveform can be readily ascertained with high certainty.

It will be appreciated that if one has multiple two-tone radar units at different positions and if one establishes the range to each of these radars by the techniques described herein, one can establish the position of the moving object by triangulation or other techniques.

As mentioned hereinabove, in order to get an unambiguous range determination, one has to ascertain in which range cell the moving object is. This is simply accomplished by adjusting the frequency separation between the tones to establish a large enough range cell so that one with confidence can ascertain that the moving object is within the range cell. Also, as mentioned before, amplitude-sensitive techniques can determine which range cell the object is in, since the amplitude of returns from objects farther away will be considerably reduced.

While the present invention has been described in connection with the preferred embodiments of the various figures, it is to be understood that other similar embodiments may be used or modifications or additions may be made to the described embodiment for performing the same function of the present invention without deviating therefrom. Therefore, the present invention should not be limited to any single embodiment, but rather construed in breadth and scope in accordance with the recitation of the appended claims.

**Claims**

1. A method for the estimation of the range from a measurement apparatus to a moving object (10), the measurement apparatus including a radar signal generator (14), an antenna (22), a mixer (92, 102) and a range estimation unit, the method comprising the steps of:

   generating continuous wave energy at two different frequencies by said signal generator(14);
   transmitting continuous wave energy by means of said antenna:

      receiving reflected waves (28, 30), at the two frequencies by means of the said antenna (22);
      generating wave forms corresponding, respectively, to the phase difference between outgoing and reflected signals at said antenna for each of said two different frequencies by means of said mixers coupled to said antenna and said signal generator; and,
      estimating range to said moving object employing said range estimation unit, including a predictor (32) and a wave matching unit coupled to said mixers;
      **characterised in that** said predictor generates a series of range dependent waveforms (130, 132, 134, 136, 138, 140, 142, 144), from a temporal waveform corresponding to the phase difference between outgoing (26) and reflected (30) waves at the second of said frequencies, said range dependent waveforms corresponding to the expected temporal phase difference of returned continuous waves at a first one of said frequencies, and **in that** the wave matching unit establishes a match between one of said range dependent waveforms and the output of the mixer associated with first one of said frequencies, whereby the range to a moving object can be estimated.

2. A method according to claim 1, wherein the frequency separation between the two frequencies defines the range resolution, with a smaller frequency separation resulting in increased resolution.

3. Apparatus for the estimation of the range to a moving object (10), the apparatus comprising:

   a radar signal generator (14) for generating continuous wave energy at two different frequencies;
   an antenna (22) coupled to said signal generator (14) for simultaneously projecting continuous wave energy therefrom;
   mixers (92, 102) coupled to said antenna (22) and said signal generator (14) for generating waveforms corresponding respectively to the phase difference between outgoing (26) and reflected energy at said antenna (22) for each of said two different frequencies; and,
   a range estimation unit coupled to said mixers (92, 102) for estimating range to said moving object (10);
   the apparatus being **characterized in that** said range estimation unit includes a predictor (32) for generating from a temporal waveform corresponding to the phase difference between outgoing (24) and reflected (30) waves at a second of said frequencies a series of range dependent waveforms (130, 132, 134, 136, 138, 140, 142, 144) corresponding to the expected temporal phase difference of returned continuous wave energy at a first one of said frequencies, and a waveform matching unit for establishing a match between one of said range dependent waveforms and the output of the mixer associated with the first one of said frequencies.

4. Apparatus according to claim 3 wherein in use, the frequency separation between the two frequencies defines the range resolution, with a smaller frequency separation, thereby resulting in increased resolution.

**Patentansprüche**

1. Ein Verfahren zur Schätzung der Entfernung von einem Messgerät zu einem sich bewegenden Objekt (10), wobei das Messgerät einen Radarsignalgenerator (14), eine Antenne (22), einen Mischer (92, 102) und eine Entfernungsschätzungseinheit umfasst, wobei das Verfahren die folgenden Schritte beinhaltet:

Generieren einer Dauerwellenenergie bei zwei unterschiedlichen Frequenzen durch den Signalgenerator (14);
Übertragen der Dauerwellenenergie mittels der Antenne;

Empfangen der reflektierten Wellen (28, 30) bei den zwei Frequenzen mittels der Antenne (22);
Generieren von Wellenformen, die jeweils der Phasendifferenz zwischen den ausgehenden und den reflektierten Signalen an der Antenne für jede der zwei unterschiedlichen Frequenzen entsprechen, mittels der an die Antenne und den Signalgenerator gekoppelten Mischer und
Schätzen der Entfernung zu dem sich bewegenden Objekt unter Einsatz der Entfernungsschätzungseinheit, die einen Prädiktor (32) und eine Wellenabgleicheinheit, gekoppelt an die Mischer, umfasst;
**dadurch gekennzeichnet, dass** der Prädiktor aus einer zeitlichen Wellenform, die der Phasendifferenz zwischen den ausgehenden (26) und den reflektierten (30) Wellen bei der zweiten der Frequenzen entspricht, eine Reihe von entfernungsabhängigen Wellenformen (130, 132, 134, 136, 138, 140, 142, 144) generiert, wobei die entfernungsabhängigen Wellenformen der erwarteten zeitlichen Phasendifferenz der zurückgesendeten Dauerwellen bei einer ersten der Frequenzen entsprechen, und dass die Wellenabgleicheinheit einen Abgleich zwischen einer der entfernungsabhängigen Wellenformen und dem Ausgang des Mischers, der der ersten der Frequenzen zugehörig ist, erstellt, wodurch die Entfernung zu einem sich bewegenden Objekt geschätzt werden kann.

2. Verfahren gemäß Anspruch 1, wobei der Frequenzabstand zwischen den zwei Frequenzen das Entfernungsauflösungsvermögen definiert, wobei ein geringerer Frequenzabstand ein erhöhtes Auflösungsvermögen ergibt.

3. Ein Gerät zur Schätzung der Entfernung zu einem sich bewegenden Objekt (10), wobei das Gerät Folgendes beinhaltet:

einen Radarsignalgenerator (14) zum Generieren einer Dauerwellenenergie bei zwei unterschiedlichen Frequenzen;
eine Antenne (22), die an den Signalgenerator (14) gekoppelt ist, um simultan Dauerwellenenergie daraus zu werfen;
Mischer (92, 102), die an die Antenne (22) und den Signalgenerator (14) gekoppelt sind, um Wellenformen zu generieren, die jeweils der Phasendifferenz zwischen der ausgehenden und der reflektierten Energie an der Antenne (22) für jede der zwei unterschiedlichen Frequenzen entsprechen; und
eine Entfernungsschätzungseinheit, die an die Mischer (92, 102) gekoppelt ist, um die Entfernung zu dem sich bewegenden Objekt (10) zu schätzen;
wobei das Gerät **dadurch gekennzeichnet ist, dass** die Entfernungsschätzungseinheit Folgendes umfasst:
einen Prädiktor (32), um aus einer zeitlichen Wellenform, die der Phasendifferenz zwischen den ausgehenden (26) und den reflektierten (30) Wellen bei einer zweiten der Frequenzen entspricht, eine Reihe von entfernungsabhängigen Wellenformen (130, 132, 134, 136, 138, 140, 142, 144) zu generieren, die der erwarteten zeitlichen Phasendifferenz der zurückgesendeten Dauerwellenenergie bei einer ersten der Frequenzen entspricht, und eine Wellenformabgleicheinheit zum Erstellen eines Abgleichs zwischen einer der entfernungsabhängigen Wellenformen und dem Ausgang des Mischers, der der ersten der Frequenzen zugehörig ist.

4. Gerät gemäß Anspruch 3, wobei im Einsatz der Frequenzabstand zwischen den zwei Frequenzen das Entfernungsauflösungsvermögen definiert, wobei ein geringerer Frequenzabstand dabei ein erhöhtes Auflösungsvermögen ergibt.

**Revendications**

1. Une méthode destinée à l'estimation de la distance d'un appareil de mesure à un objet en mouvement (10), l'appareil de mesure comportant un générateur de signaux radar (14), une antenne (22), un mélangeur (92, 102) et une unité d'estimation de distance, la méthode comprenant les étapes de :

   génération d'une énergie d'onde continue à deux fréquences différentes par ledit générateur de signaux (14) ;
   transmission d'une énergie d'onde continue au moyen de ladite antenne ;
   réception d'ondes réfléchies (28, 30), aux deux fréquences au moyen de ladite antenne (22) ;
   génération de formes d'onde correspondant, respectivement, à la différence de phase entre signaux sortants et réfléchis au niveau de ladite antenne pour chacune desdites deux fréquences différentes au moyen desdits mélangeurs couplés à ladite antenne et audit générateur de signaux ; et,
   estimation de la distance audit objet en mouvement en utilisant ladite unité d'estimation de distance, comportant un prédicteur (32) et une unité d'appariement d'ondes couplée auxdits mélangeurs ;
   **caractérisée en ce que** ledit prédicteur génère une série de formes d'onde dépendantes de la distance (130, 132, 134, 136, 138, 140, 142, 144), à partir d'une forme d'onde temporelle correspondant à la différence de phase entre des ondes sortantes (26) et réfléchies (30) à la deuxième fréquence desdites fréquences, lesdites formes d'onde dépendantes de la distance correspondant à la différence de phase temporelle attendue d'ondes continues renvoyées à une première fréquence desdites fréquences, et **en ce que** l'unité d'appariement d'ondes établit un appariement entre une forme d'onde parmi lesdites formes d'onde dépendantes de la distance et la sortie du mélangeur associée à la première fréquence desdites fréquences, grâce à quoi la distance à un objet en mouvement peut être estimée.

2. Une méthode selon la revendication 1, dans laquelle la séparation de fréquences entre les deux fréquences définit la résolution de distance, une séparation de fréquences plus petite ayant pour résultat une résolution accrue.

3. Appareil destiné à l'estimation de la distance à un objet en mouvement (10), l'appareil comprenant :

   un générateur de signaux radar (14) destiné à générer une énergie d'onde continue à deux fréquences différentes ;
   une antenne (22) couplée audit générateur de signaux (14) destinée à projeter simultanément une énergie d'onde continue depuis celle-ci ;
   des mélangeurs (92, 102) couplés à ladite antenne (22) et audit générateur de signaux (14) destinés à générer des formes d'onde correspondant respectivement à la différence de phase entre l'énergie sortante et l'énergie réfléchie au niveau de ladite antenne (22) pour chacune desdites deux fréquences différentes ; et,
   une unité d'estimation de distance couplée auxdits mélangeurs (92, 102) destinée à estimer la distance audit objet en mouvement (10) ;
   l'appareil étant **caractérisé en ce que** ladite unité d'estimation de distance comporte un prédicteur (32) destiné à générer, à partir d'une forme d'onde temporelle correspondant à la différence de phase entre des ondes sortantes (26) et réfléchies (30) à une deuxième fréquence desdites fréquences, une série de formes d'onde dépendantes de la distance (130, 132, 134, 136, 138, 140, 142, 144) correspondant à la différence de phase temporelle attendue d'énergie d'onde continue renvoyée à une première fréquence desdites fréquences, et une unité d'appariement de formes d'onde destiné à établir un appariement entre une desdites formes d'onde dépendantes de la distance et la sortie du mélangeur associée à la première fréquence desdites fréquences.

4. Appareil selon la revendication 3, dans lequel, lors de l'utilisation, la séparation de fréquences entre les deux fréquences définit la résolution de distance, avec une séparation de fréquences plus petite, ayant de ce fait pour résultat une résolution accrue.

*Fig. 1*

At location 0

$\phi_{diff}$ f$_1$  60

$\phi_{diff}$ f$_2$  62

} waveform has same structure

*Fig. 2*

At location λ /4

$\phi_{diff}$ f$_1$  60'

$\phi_{diff}$ f$_2$  62'

} waveform f$_2$ = - f$_1$ waveform

*Fig. 3*

At location between 0 and λ /4

$\phi_{diff}$ f$_1$  60"

$\phi_{diff}$ f$_2$  62"

*Fig. 4*

*Fig. 5*

*Fig. 6*

Templates

predicted $f_2$ waveforms for
different ranges 10 meters
apart

*Fig. 7*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 53786804 P
- US 0430116 W, Paul Zemany and Eldon Sutphin

- US 6380882 B